# EUROPÄISCHE PATENTSCHRIFT

(11) **EP 2 387 664 B1**
(45) Veröffentlichungstag und Bekanntmachung des Hinweises auf die Patenterteilung: **05.11.2014**
(21) Anmeldenummer: 09801413.7
(22) Anmeldetag: 22.12.2009
(51) Int. Cl.: F03D 11/00, F03D 7/02, F16C 19/54

(54) **WINDKRAFTANLAGE**
WIND POWER PLANT
ÉOLIENNE

(30) Priorität: 14.01.2009 DE 102009004991
(43) Veröffentlichungstag der Anmeldung: 23.11.2011
(73) Patentinhaber: IMO Holding GmbH, 91350 Gremsdorf (DE)
(72) Erfinder: FRANK, Hubertus, 91315 Höchstadt/Aisch (DE)
(74) Vertreter: Küchler, Stefan
(86) Internationale Anmeldenummer: PCT/EP2009/009224
(87) Internationale Veröffentlichungsnummer: WO 2010/081528

(56) Entgegenhaltungen:
- WO-A1-03/087610
- WO-A1-2007/009629
- CN-Y- 201 148 940
- FR-A1- 2 604 753
- JP-A- 55 066 669
- US-A1- 2004 211 638

## Beschreibung

Die Erfindung richtet sich auf eine Windkraftanlage mit einem Rotor, der um eine etwa in Windrichtung weisende Achse drehbar gelagert ist, und mit wenigstens zwei ringförmigen, zueinander konzentrischen Anschlusselementen zum Anschluss an gegeneinander verdrehbare Anlagenteile der Windkraftanlage, von denen ein rotorseitiges Anschlusselement Mittel zum Anschluss an den Rotor der Windkraftanlage oder an eine Abtriebswelle eines daran gekoppelten Getriebes aufweist, mit wenigstens einem Element mit einer Freilauf-Charakteristik, welches zwischen zwei ringförmigen Anschlusselementen angeordnet ist und zusammen mit diesen einen Freilauf bildet, und wobei konzentrisch zu den beiden ringförmigen Anschlusselementen des Freilaufs ein weiteres, ringförmiges Anschlusselement vorgesehen ist.

Windkraftanlagen unterliegen zumeist sehr unregelmäßigen Windverhältnissen und erfahren infolgedessen starke Lastvariationen, wodurch sehr hohe Lastwechselzahlen in dem Rotor und den nachgeschalteten Komponenten, insbesondere Getriebe und Generator, hervorgerufen werden. Derartige, ständig wechselnde Belastungen beeinträchtigen die Dauerfestigkeit der betroffenen Teile.

Eine gattungsgemäße Windkraftanlage ist der FR 2 604 753 A1 zu entnehmen. Dieses Dokument widmet sich der Ausgestaltung einer Drehverbindung zwischen dem Rotor der Windkraftanlage einerseits und einem dem Generator vorgeschalteten Getriebe andererseits. Dafür ist ein Freilauf vorgesehen. Dieser ist derart ausgebildet, dass zunächst der Generator motorisch anlaufen kann, ohne das Windrad anzutreiben. Wenn dieses dann durch Windkraft im Leerlauf angelaufen ist und den nachgeschalteten Generator zu überholen trachtet, schaltet der Freilauf in den drehfesten Zustand und kuppelt dadurch den Generator mit dem Windrad. In der Realisierung ist dazu die angetriebene Welle des Generatorgetriebes innerhalb eines das Windrad tragenden und lagernden Rohrs nach vorne durch die Nabe des Windrades hindurchgeführt. Jenseits der vorderen Stirnseite des Tragrohrs sitzt der Freilauf. Dort ist der Freilauf völlig unzugänglich und kann erst nach Demontage des Windrades oder zumindest dessen vorderster Verkleidung inspiziert oder repariert werden. Außerdem sind durch den axialen Versatz des Freilaufs gegenüber dem Tragrohr und damit der dortigen Lagerung des Windrades Biegeschwingungen zwischen dem Windrad und dem Tragrohr im Bereich des Freilaufs möglich, welche eine erhebliche mechanische Beanspruchung für den dortigen Freilauf darstellen.

Man hat auch schon versucht, zwischen der Nabe des Windrades und den nachgeschalteten Elementen eine elastische Kupplung einzubauen, die einen gewissen Relativverdrehwinkel zwischen den beiden, aneinandergekuppelten Elementen zulässt. Ist dieser maximale Relativverdrehwinkel erreicht, so werden jedoch weitere Drehzahlschwankungen unverändert an die nachgeschalteten Elemente weitergereicht, so dass die auf diesem Weg erzielbare Dämpfung stark eingeschränkt ist. Darüber hinaus entstehen in diesem Fall innerhalb eines Getriebes erhebliche Beschleunigungen und Verzögerungen. Dies stellt für das Getriebe eine wechselnde Belastung dar, die sich insbesondere in einer Wechsellast am Fuß und im Bereich der Flanke der beteiligten Getriebezähne äußert. Derartige Wechsellasten wirken sich jedoch auf die Lebensdauer der Verzahnung und anderer Komponenten erheblich ungünstiger aus als Schwellasten.

Aus den Nachteilen des beschriebenen Standes der Technik resultiert das die Erfindung initiierende Problem, eine gattungsgemäße Windkraftanlage derart weiterzubilden, dass die Dauerfestigkeit der Komponenten des Rotors, Getriebes und/oder Generators gesteigert ist.

Die Lösung dieses Problems gelingt dadurch, dass beide ringförmigen Anschlusselemente des Freilaufs wenigstens je eine ebene Anschlussfläche aufweisen zum Anschluss an ein rotierendes Maschinenelement, wobei beide Anschlussflächen des Freilaufs jeweils mehrere, kranzförmig angeordnete Bohrungen zum Einschrauben oder Durchstecken von Befestigungsschrauben oder -bolzen aufweisen, wobei ferner wenigstens ein Anschlusselement über wenigstens eine eingearbeitete Laufbahn für eine Reihe von darauf abrollenden Wälzkörpern verfügt, und wobei in dem Bereich des Spaltes zwischen dem weiteren, ringförmigen Anschlusselement und einem der anderen beiden ringförmigen Anschlusselemente an Mantelflächen der betreffenden ringförmigen Anschlusselemente nach Art eines Radiallagers wenigstens eine Laufbahn für eine Reihe von darauf abrollenden Wälzkörpern vorgesehen ist, welche zusammen mit den betreffenden Anschlusselementen eine Drehlagerung bilden.

Dabei ist der Freilauf derart ausgebildet, dass er ein von dem Windrad bzw. den Rotorblättern erzeugtes Drehmoment an der Nabe des Windrades in der üblichen Drehrichtung einen Drehschluss ausbildet, dieses vom Wind hervorgerufene, antreibende Drehmoment also an die nachgeordneten Komponenten - vorzugsweise Getriebe und/oder Generator - überträgt, bei fehlendem Drehmoment und/oder gar bei bremsendem Drehmoment dagegen in den Freilaufbetrieb übergeht, wobei die nachgeschalteten Komponenten von dem Windrad nicht verzögert werden, sondern durch ihre Massenträgheit ihre Drehzahl weitgehend aufrechterhalten können bzw. in der Drehzahl langsamer abfallen können als bspw. das durch eine Gegenböe abgebremste Windrad. Steigt die Windgeschwindigkeit wieder an, und wird dadurch das Windrad wieder beschleunigt, so geht der Freilauf bei synchroner Drehzahl wieder in einen Drehschluss über, und das Windrad nimmt die angeschlossenen Komponenten, also Getriebe und/oder Generator, wieder mit, liefert also Energie. Damit wird eine erhebliche Reduzierung der Lastamplituden und damit eine Verlängerung der Lebensdauer der rotierenden Komponenten bei ansonsten gleicher Bauteilgestaltung erreicht. Ein weiteres, ringförmiges, zu den ersten beiden konzentrisches Anschlusselement ist als drittes Anschlusselement gegenüber den anderen beiden verdrehbar und kann aus diesem Grund dazu verwendet werden, um eine Lagerung an einem feststehenden Chassis der Windkraftanlage, insbesondere ihrer Gondel, zu bewirken; dieses soll im Folgenden als chassisseitiges Anschlusselement bezeichnet werden. Damit wird die Rotorwelle in exakt dem betreffenden axialen Punkt unterstützt, wo der Freilauf sitzt, so dass sich an dieser Stelle der Rotorwelle selbst bei Vibrationen in der Anlage unter gar keinen Umständen ein Schwingungsbauch der Rotorwelle ausbilden kann, sondern stets ein Schwingungsknoten. Damit ist der dort angeschlossene Freilauf selbst im Fall von Schwingungen in der Windkraftanlage vor Beschädigungen optimal geschützt, was für eine maximale Lebensdauer der betreffenden Komponenten vorteilhaft ist. Beide ringförmigen Anschlusselemente des Freilaufs weisen wenigstens je eine ebene Fläche auf zum Anschluss an ein rotierendes Maschinenelement, wobei diese Flächen der reibschlüssigen Anlage an je einem Maschinenteil bzw. -element dienen. Bei einer ersten Ausführungsform weisen diese beiden Anschlussflächen jeweils in die selbe Richtung, also jeweils nach oben oder jeweils nach unten in Bezug auf die vertikale Drehachse der Anordnung. Bei einer anderen Ausführungsform weisen diese beiden Anschlussflächen in entgegengesetzte Richtungen, also die eine nach oben, die andere nach unten. Jeweils mehreren, in den Anschlussfläche(n) kranzförmig verteilt angeordneten Bohrungen zum Einschrauben oder Durchstecken von Befestigungsschrauben oder -bolzen obliegt es, die für einen Reibschluss der Anschlussflächen mit dem jeweils angrenzenden Maschinenteil erforderliche Normalkraft hervorzurufen. Indern im Bereich des Spaltes zwischen dem dritten oder chassisseitigen Anschlusselement und einem der ersten beiden Anschlusselemente an jedem dieser Elemente wenigstens eine Laufbahn für eine Reihe von darauf abrollenden Wälzkörpern vorgesehen ist, welche zusammen mit den betreffenden Anschlusselementen eine Lagerung bilden, ergibt sich die Struktur einer Wälzlagerung mit einem äußert geringen Reibungsverlust, was bei einer Windkraftanlage besonders wichtig ist, um einen maximalen Wirkungsgrad zu erzeugen, während gleichzeitig eine maximale Radialkraft aufgenommen werden kann, so dass Schwingungen der Nabenwelle in radialer Richtung zuverlässig vermieden werden.

Es hat sich als günstig erwiesen, dass der zweite Ring des Freilaufs Mittel zum Anschluss an einen Generator oder ein diesem vorgeschaltetes Getriebe oder Getriebeelement aufweist; dieses wird im Folgenden als generatorseitiges Anschlusselement bezeichnet. Damit ist die Möglichkeit geschaffen, im Arbeitsbetrieb die Windenergie über den Drehschluss an das Getriebe und schließlich zum Generator zu übertragen.

Es liegt im Rahmen der Erfindung, dass der Freilauf eine oder vorzugsweise mehrere (Klemm-) Rollen oder Klemmkörper aufweist, welche sich je nach Drehrichtung zwischen den beiden ringförmigen Anschlusselementen festklemmen oder von diesen lösen. Dabei erfahren die Rollen oder sonstigen Klemmkörper geringe Relativverlagerungen innerhalb des Spaltes zwischen den beiden ringförmigen Anschlusselementen des Freilaufs. Sie können sich dabei zwischen zwei (End-) Positionen verlagern, von denen eine dem Freilaufzustand und die andere dem Zustand der drehfesten Kopplung entspricht. Dies kann insbesondere dadurch erreicht werden, dass sich die von dem Klemmelement wahrgenommene Spaltweite zwischen diesen beiden (End-) Positionen (geringfügig) ändert, und zwar von einem Wert für die Spaltweite im Freilaufzustand, welcher geringfügig größer ist als die betreffende Erstreckung, insbesondere Dicke, des betreffenden Klemmkörpers, bis hin zu einem Wert für die Spaltweite im drehfesten Zustand, welcher geringfügig kleiner ist als die betreffende Erstreckung, insbesondere Dicke, des betreffenden Klemmkörpers.

Die Erfindung lässt sich dahingehend weiterbilden, dass wenigstens eines der beiden ringförmigen Anschlusselemente des Freilaufs Anlaufflächen aufweist, welche mit der Tangente in dem betreffenden Punkt einen Winkel einschließen und somit derart schräg verlaufen, dass der von diesen begrenzte Spalt gegenüber dem anderen ringförmigen Anschlusselement des Freilaufs sich in jeweils derselben Drehrichtung verjüngt, vorzugsweise entlang einer Rampe. Bevorzugt befindet sich zwischen zwei derartigen Rampen jeweils ein abrupter Übergang von der erweiterten Spaltweite einer Rampe zu der verjüngten Spaltweite der benachbarten Rampe. An einem solchen abrupten Übergang ergibt sich in der Draufsicht eine in radialer Richtung vorspringende Spitze. Weisen diese Spitzen von dem nabenseitigen Anschlusselement zu dem generatorseitigen Anschlusselement, so liegen die verjüngten Bereiche des Spaltes entgegen der üblichen Drehrichtung des Windrades jeweils räumlich gegenüber den entlang einer flachen Rampe allmählich erweiterten Spaltbereichen der Anlauffläche für den selben Klemmkörper nach hinten versetzt. Weisen diese Spitzen dagegen von dem generatorseitigen Anschlusselement zu dem nabenseitigen Anschlusselement, so liegen die erweiterten Bereiche des Spaltes entgegen der üblichen Drehrichtung des Windrades jeweils räumlich gegenüber den entlang einer flachen Rampe allmählich verjüngenden Spaltbereichen der Anlauffläche für den selben Klemmkörper nach hinten versetzt.

Die Erfindung empfiehlt, die Anlaufflächen als Segmentkörper auszubilden und in Umfangsrichtung des betreffenden Rings aneinander zu reihen und vorzugsweise aneinanderzustoßen. Dadurch lässt sich eine komplexe Ringgeometrie unter Verwendung einer einzigen Art von Segmentkörpem mit stetigem Verlauf der Anlauffläche herstellen.

Andererseits lassen sich die Anlaufflächen auch an Abstandselementen anordnen, welche sich jeweils zwischen benachbarten Klemmkörpern oder -rollen befinden. Auch mittels derartiger Abstandselemente lässt sich eine Verjüngung im Bereich der Klemmkörper realisieren, welche zu einer drehrichtungsabhängigen Klemmung führt.

Eine wiederum andere Ausführungsform sieht vor, dass die Anlaufflächen an einem oder mehreren käfig- oder bandartigen Segment(en) angeordnet sind, welche jeweils benachbarte Klemmkörper oder -rollen voneinander trennen. Damit lassen sich mehrere Anlaufflächen zu einem gemeinsamen Teil vereinigen, welches bspw. durch Ausstanzung hergestellt sein kann.

Die Klemmkörper oder -rollen können als Wälzkörper ausgebildet sein, die in einer Laufbahn jedes ringförmigen Anschlusselements abrollen, wobei die mit je einer Anlauffläche versehenen Abstandselemente und/oder die Anlaufflächen aufweisenden, käfig- oder bandartigen Segmente in einer vorzugsweise nutförmigen Vertiefung einer Laufbahn geführt sind. In einer derartigen Vertiefung erfahren die Käfigsegmente eine Seitenführung, welche ihre Ausrichtung parallel zur Grundebene der Drehanordnung unabhängig von ihrer Position garantiert.

Weitere Vorteile ergeben sich durch verschließbare Ausnehmungen in wenigstens einem ringförmigen Anschlusselement zum Einfüllen von Klemm-und/oder Wälzkörpern und ggf. Abstandselementen. Damit ist die Möglichkeit geschaffen, die Klemmkörper oder -rollen nach präziser Relativausrichtung beider ringfömiger Anschlusselemente nachträglich einzusetzen, so dass bei der Laufbahngestaltung im Hinblick auf die Montierbarkeit der Anordnung keine Einschränkungen zu beachten sind. Nach dem vollständigen Bestücken des Freilaufs mit Klemmkörpern, -rollen und ggf. Abstandselementen wird/werden die Einfüllausnehmung(en) durch einschraubbare oder anderweitig applizierbare Pfropfen verschlossen.

Der Freilauf könnte auch elektrisch schaltbar ausgebildet sein, wobei die Umschaltung zwischen Drehschluss- und Freilaufzustand in Abhängigkeit von der relativen Drehrichtung zwischen den beiden ringförmigen Anschlusselementen erfolgt. Dabei gibt es insbesondere die Möglichkeit, durch eine bspw. durch Magnetkraft bewirkte Relativverschiebung eines ringförmigen Teils der Drehanordnung in axialer Richtung zwei ringförmige Anschlusselemente in einen drehfesten Form- oder Reibschluss zu versetzen, bei entgegengesetzter Relativverschiebung diesen Form- oder Reibschluss dagegen aufzulösen. Es wäre aber auch eine Anordnung ähnlich einem Motor denkbar, wobei aktivierbare Elektromagnete an einem der beiden Anschlusselemente mit (Permanent-) Magneten an dem anderen Anschlusselement des Freilaufs einen Magnetschluss ausüben, während dieser Magnetschluss in deaktiviertem Zustand aufgehoben ist.

Ferner sollte in dem Spalt zwischen den beiden ringförmigen Anschlusselementen wenigstens eine Reihe umlaufender Wälzkörper angeordnet sein. Diese umlaufenden Wälzkörper stützen zwei eigens dafür vorgesehene Laufbahnen gegeneinander ab und tragen somit dazu bei, dass die beiden Anschlusselemente stets koaxial zueinander ausgerichtet bleiben, wodurch die Klemmkörper vor Beschädigungen geschützt werden.

Vorzugsweise ist zu beiden Seiten des/der Freilaufelemente jeweils eine Reihe von umlaufenden Wälzkörpern angeordnet. Mit einer derartigen Anordnung lässt sich eine optimale Abstützung der beiden Anschlusselemente erreichen.

Die Wälzkörper wenigstens einer Reihe in dem Spalt zwischen den beiden ringförmigen Anschlusselementen des Freilaufs können als Kugeln ausgebildet sein. Kugeln finden in Laufbahnen mit konkavem Querschnitt einen optimalen Seitenhalt und können daher insbesondere auch Axialkräften und Kippmomenten in optimaler Weise widerstehen.

Wenn - wie die Erfindung weiterhin vorsieht - die Wälzkörper der Lagerung als Rollen ausgebildet sind, so ist ihre Tragkraft maximal. Denn bei derartigen Wälzkörpern gibt es nicht nahezu punktförmige Berührungen zwischen einem Wälzkörper und den betreffenden Laufbahnen wie etwa bei kugelförmigen Wälzkörpern, sondern linienhafte Berührungen mit demzufolge deutlich reduzierter Flächenpressung.

Es liegt im Rahmen der Erfindung, dass ein Anschlusselement der Lagerung, also das dritte Anschlusselement oder das diesem unmittelbar benachbarte, einen rundumlaufenden, in radialer Richtung vorspringenden Bund aufweist, der von einer Nut in dem anderen Anschlusselement der Lagerung in einem Abstand umgriffen wird. Damit weist der Spalt zwischen den beteiligten Anschlusselementen in einem Schnitt quer zum Umfang der betreffenden Anschlussringe eine erhebliche Ausbauchung auf, welche sich besonders für die Übertragung von Axialkräften zwischen diesen Ringen eignet.

Im Idealfall verfügt der rundumlaufende Bund an einem der beiden Anschlusselemente der Lagerung über einen etwa rechteckigen Querschnitt, wobei an allen drei freien Ringflächen des rundumlaufenden Bundes, also an seiner Ober-, Unter- und Stirnseite, je eine Reihe von Wälzkörpern abrollt. Dabei können die Wälzkörper einer Reihe an der Ober- oder Unterseite des Bundes jeweils axiale Druckkräfte in einer Richtung übertragen (also bspw. von oben nach unten gerichtete Kräfte oder Kräfte in entgegengesetzter Richtung von unten nach oben), sowie ggf. Kippmomnente, während die im Bereich der Stirnseite abrollenden Wälzkörper der Übertragung von Radialkräften dienen. Eine optimale Tragkraft bieten dabei rollen-, nadel- oder trommelförmige Wälzkörper.

Ferner kann zwischen den zwei Anschlusselementen, insbesondere zwischen den beiden Anschlusselementen der Lagerung, eine vorzugsweise schaltbare Bremse angeordnet sein. Mit dieser Bremse besteht die Möglichkeit, die Rotorwelle der Windkraftanlage gegenüber dem Chassis der Windkraftanlage bzw. Gondel stillzusetzen, bspw. für Reparatur- oder Wartungsarbeiten an einem Rotorblatt.

In Weiterverfolgung dieses Erfindungsgedankens kann vorgesehen sein, dass an einem Anschlusselement, insbesondere an einem Anschlusselement der Lagerung, ein rundumlaufender, vorzugsweise in radialer Richtung vorspringender Bund vorgesehen ist, dessen Flanken sich zur Auflage von Bremsbacken eignen. Diese Struktur entspricht etwa einer Scheibenbremse. Diese Anordnung wird ergänzt durch wenigstens ein Paar von einander in axialer Richtung gegenüberliegenden Bremsbacken, welche den rundumlaufenden Bund zu beiden Seiten umgreifen. Indem diese Bremsbacken einander gegenüber liegen, üben sie bei betätigter Bremse entgegengesetzte Axialkräfte auf den rundumlaufenden Bund des benachbarten Anschlusselements aus, so dass die Wälzlagerungen von Axialkräften auch im Bremsfall weitgehend frei bleiben.

Zur Betätigung der Bremse sollten die beiden Bremsbacken eines Paares in axialer Richtung gegeneinander anstellbar sein. Da das benachbarte Anschlusselement und also auch dessen von den Bremsbacken beidseitig umgriffener Bund durch die Wälzkörper der Lagerung in axialer Richtung unverschieblich geführt ist, müssen zum Lüften der Bremse beide Bremsbacken von dem Bund entfernt werden und umgekehrt bei Betätigung der Bremse beide an diesen angestellt werden.

Schließlich entspricht es der Lehre der Erfindung, dass die beiden Bremsbacken eines Paares hydraulisch anstellbar sind. Durch den Druckausgleich in einem Hydraulikkreis ist gewährleistet, dass beide Bremsbacken stets mit der selben Kraft an den einander gegenüber liegenden Bereichen des umgriffenen Bundes anliegen und sich demnach die beiden Axialkräfte aufheben.

Weitere Merkmale, Einzelheiten, Vorteile und Wirkungen auf der Basis der Erfindung ergeben sich aus der folgenden Beschreibung einer bevorzugten Ausführungsform der Erfindung sowie anhand der Zeichnung. Hierbei zeigt:
- Fig. 1: eine erste Ausführungsform der Erfindung in einer Schnittansicht quer durch die zusammengefügten Ringe, teilweise abgebrochen;
- Fig. 2: eine perspektivische Ansicht auf die aufgeschnittene Anordnung aus Fig. 1, ebenfalls abgebrochen, wobei ein Teil des äußersten Rings entfernt ist, um den Blick auf die Klemmkörper des Freilaufs freizugeben;
- Fig. 3: eine zweite Ausführungsform der Erfindung In einer perspektivischen Ansicht auf die aufgeschnittenen und gegeneinander verdrehten Ringe, ebenfalls abgebrochen;
- Fig. 4: einen Schnitt durch die Anordnung aus Fig. 3, wiederum abgebrochen;
- Fig. 5: eine abermals abgewandelte Ausführungsform der Erfindung in einer perspektivischen Ansicht auf die aufgeschnittenen Ringe, ebenfalls abgebrochen, wobei ein Teil des äußersten Rings entfernt ist, um den Blick auf die Klemmkörper des Freilaufs freizugeben;
- Fig. 6: einen Schnitt durch die Anordnung aus Fig. 5, ebenfalls abgebrochen;
- Fig. 7: eine perspektivische Ansicht auf einen aufgeschnittenen Ring eines Freilaufs gemäß einer noch anderen Ausführungsform der Erfindung, abermals abgebrochen, samt einiger darin eingreifender Klemmrollen und einem die Anlaufflächen tragenden Käfigsegment;
- Fig. 8: einen Freilaufring gemäß einer weiter abgewandelte Ausführungsform der Erfindung in einer der Fig. 7 entsprechenden Darstellung, samt einiger darin eingreifender kugelförmiger Klemmkörper einigen, jeweils eine Anlauffläche tragenden Abstandselementen;
- Fig. 9: den Freilaufring aus Fig. 8 nach Entfernung der kugelförmigen Klemmkörper sowie der Anlaufflächen tragenden Abstandselemente;
- Fig. 10: ein Abstandselement aus Fig. 8 mit einer Anlauffläche für einen Klemmkörper in einer perspektivischen Ansicht; sowie
- Fig. 11: eine Seitenansicht auf einige Abstandselemente gemäß Fig. 10 mit je einem darin eingreifenden Klemmkörper.

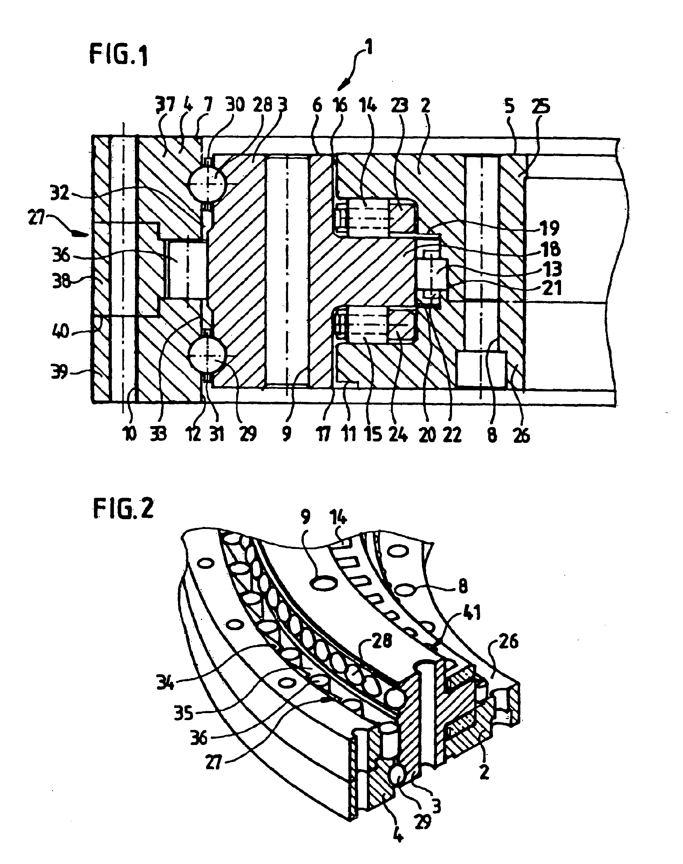

In Fig. 1 ist beispielhaft für die Erfindung ein Querschnitt durch die Ringe eines Wälzlagers 1 für den Rotor einer Windkraftanlage wiedergegeben, deren Windrad eine etwa in Windrichtung weisende Drehachse aufweist. Das Wälzlager 1 kann als Hauptlager der Windkraftanlage verwendet werden, welches auch die Rotornabe trägt; insbesondere bei einer getriebelosen Windkraftanlage kann das Lager 1 auch als weiteres, die Rotorwelle führendes Lager dienen, oder es ist an einen Anschluss, insbesondere den Ausgang, eines Getriebes oder einer Kupplung in dem Übertragungsstrang vom Windrad zum Generator angeschlossen.

Das Lager 1 umfaßt drei jeweils gegeneinander verdrehbare Ringe 2, 3, 4. In dem Beispiel aus Fig. 1 wird der innere Ring 2 am Chassis des Maschinenhauses festgelegt, der mittlere Ring 3 wird an die Rotornabe oder-welle oder dem Ausgang eines Getriebes oder einer Kupplung angeschlossen, und der äußere Ring 4 an dem Rotor des Generators oder einem diesem vorgeschalteten Getriebeelement.

Zu diesem Zweck verfügt jeder Ring 2, 3, 4 jeweils über wenigstens eine ebene, zur Ringebene parallele Anschlussfläche 5, 6, 7, sowie über Befestigungsmittel 8, 9, 10 zum Festlegen an dem jeweiligen Anlagenteil. Diese Befestigungsmittel 8, 9, 10 sind bevorzugt jeweils um die Drehachse des Lagers 1 verteilt angeordnet, insbesondere in äquidistanten Abständen. Bei den Befestigungsmitteln handelt es sich beispielsweise um Durchgangs- oder Sacklochbohrungen mit zu der Drehachse des Lagers 1 paralleler Längsachse. Insbesondere Sacklochbohrungen können zum Einschrauben von Befestigungsschrauben, -bolzen od. dgl. mit einem Innengewinde versehen sein. Vorzugsweise münden die Bohrungen 8, 9, 10 in der jeweiligen Anschlussfläche 5, 6, 7.

Zwischen dem mittleren Ring 3 und dem inneren Ring 2 einerseits und dem äußeren Ring 4 andererseits befindet sich jeweils ein Spalt 11, 12, welcher die leichtgängie Relativverdrehbarkeit dieser Ringe 2, 3, 4 gegeneinander ermöglicht. Zur verdrehbaren Führung der Ringe 2, 3, 4 aneinander befinden sich im Bereich der Spalte 11, 12 jeweils Wälzkörper mit einer zumindest bereichsweise rotationssymmetrischen Oberfläche.

Dabei ist der mittlere Ring 3 über eine oder im vorliegenden Beispiel mehrere Reihen von Wälzkörpern 13, 14, 15 an dem radial innen liegenden Ring 2 geführt. Hierbei handelt es sich im vorliegenden Beispiel um drei Reihen von Rollen 13, 14, 15. Deren Laufbahnen befinden sich an der radial außen liegenden Mantelfläche 16 des inneren Rings 2 einerseits, an der radial innen liegenden Mantelfläche 17 des mittleren Rings andererseits. Zur Ausbildung dieser Laufbahnen ist an einer dieser beiden Mantelflächen 16, 17, vorzugsweise an der Innenseite 17 des mittleren Rings 3, ein rundumlaufender Bund 18 vorgesehen, der sich in eine rundumlaufende, nutförmige Vertiefung 19 in der Mantelfläche 17, 16 des jeweils anderen Rings 2, 3, vorzugsweise des inneren Rings 2, erstreckt.

Zwischen der freien Stirnseite 20 des Bundes 18 und dem Grund 21 der Nut 19 befindet sich eine Reihe von Rollen 13 mit zu der Drehachse des Lagers 1 paralleler Rotationsachse, nach Art eines Radiallagers; diese Rollen können bspw. in einem Käfig 22 geführt sein. Je eine weitere Reihe von Rollen 14, 15 befindet sich oberhalb bzw. unterhalb des Bundes 18, wobei die Rotationsachsen dieser Rollen 14, 15 jeweils radial bezüglich der Drehachse des Lagers 1 orientiert sind, nach Art eines Axiallagers; auch diese Rollen 14, 15 können in je einem Käfig 23, 24 geführt sein. Während von der Rotornabe auf den mittleren Ring 3 eingeleitete Druckkräfte durch die untere Reihe von Rollen 15 auf den Innenring 2 übertragen werden, übernimmt dies bei entgegengesetzt gerichteten Zugkräften die obere Reihe von Rollen 14; Axialkräfte überträgt dagegen die mittlere Reihe von Rollen 13. Bevorzugt sind die Laufbahnen für die Rollen 13, 14, 15 direkt in die betreffenden Ringe 2, 3 eingearbeitet, vorzugsweise durch Präzisionsbearbeitung der entsprechenden Oberflächen, insbesondere des Bundes 18 einerseits und der Nut 19 andererseits.

Um ein derartiges Wälzlager 1 mit zwei Ringen 2, 3, wovon einer einen Bund 18 aufweist, der in eine Nut 19 des anderen eingreift, überhaupt montieren zu können, ist der die Nut 19 aufweisende Ring 2, 3 - hier der radial innen liegende Ring 2 - in zwei aufeinander liegende Ringe 25, 26 unterteilt. Dabei trennt diese Unterteilung auch die Nut 19 in einen unteren und einen oberen Teil, so dass vor dem Zusammenbau der Teilringe 25, 26 noch keine Nut 19 existiert, sondern nur zwei Auskehlungen, welche erst zusammengefügt werden, nachdem der Bund 18 des anderen Rings 2, 3 - hier des mittleren Rings 3 - in diese Auskehlungen eingelegt wurde.

Mit einer solchen Konstruktion lassen sich überdies auch Kippmomente aufnehmen, welche bspw. bei ungleichen Windbedingungen an den verschiedenen Rotorblättern auftreten können. Damit ist die Rotornabe optimal am Chassis des Maschinenhauses gelagert.

Im Gegensatz zu herkömmlichen Windkraftanlagen ist jedoch der Rotor des Generators nicht starr mit der Rotornabe oder einem derselben nachgeordneten Getriebe verbunden, sondern über einen Freilauf 27 daran gekoppelt. Dieser Freilauf 27 befindet sich zwischen dem mittleren Ring 3 und dem äußeren Ring 4, insbesondere in dem Bereich des dazwischen liegenden Spaltes 12.

Zusätzlich wird die verdrehbare Führung zwischen diesen beiden Ringen 3, 4 durch eine oder mehrere Reihen von Wälzkörpern sichergestellt. Im vorliegenden Fall handelt es sich hierbei um zwei Reihen von Wälzkörpern, insbesondere Kugeln 28, 29. Diese Wälzkörper 28, 29 sind in dem Spalt 12 zwischen dem mittleren Ring 3 und dem Außenring 4 angeordnet und können jeweils durch Käfige 30, 31 auf äquidistanten Positionen gehalten werden. Die Laufbahnen für diese vorzugsweise kugelförmigen Wälzkörper 28, 29 sind in die betreffenden Ringe 3, 4 direkt eingearbeitet, vorzugsweise durch Präzisionsbearbeitung der entsprechenden Oberflächen, insbesondere der äußeren Mantelfläche 32 des mittleren Rings 3 einerseits und der radial innen liegenden Mantelfläche 33 des äußeren Rings 4 andererseits.

Der eigentliche Freilauf 27 befindet sich in axialer Richtung zwischen den beiden Wälzkörperreihen 28, 29. Er umfaßt eine Mehrzahl von etwa keilförmigen Verjüngungselementen 34 an einer der Mantelflächen 32, 33, welche den Spalt 12 begrenzen. Diese Verjüngungselemente 34 sorgen insgesamt dafür, dass der Querschnitt des Spaltes 12, insbesondere dessen Dicke in radialer Richtung, nicht konstant ist, sondern sägezahnförmig variiert. Die Verjüngungselemente 34 sind an dem betreffenden Ring 3, 4 bevorzugt angeformt, bspw. durch entsprechende An- oder Ausfräsungen desselben im Bereich des Spaltes 12 gebildet. Die Verjüngungselemente 34 zusammengenommen erstrecken sich vorzugsweise entlang des gesamten Spaltumfangs und haben jeweils etwa gleichen Querschnitt und gleiche Abstände. Sie sind außerdem allesamt in der selben Umdrehungsrichtung ausgeordnet, d.h., in einer bestimmten Drehrichtung sind die flachen Enden aller Verjüngungselemente 34 jeweils vorne, während ihre jeweils anderen, verdickten Enden allesamt in dieser Drehrichtung hinten angeordnet sind. Der Abstand a₁ zwischen dem flachen Ende und dem verdickten Ende desselben Verjüngungselements 34 entspricht etwa dessen Höhe h in axialer Richtung der Drehlagerung 1, vorzugsweise zwischen dem halben und dem doppelten Wert desselben: 0,5 * h ≤ a₁ ≤ 2 * h. Das verdickte Ende eines Verjüngungselements 34 kann direkt an das flache Ende des benachbarten Verjüngungselements 34 angrenzen oder einen Abstand a₂ von diesem aufweisen, wobei vorzugsweise gilt: a₂ ≤ a₁, insbesondere: a₂ ≤ 0,5 * a₁.

Diese verdickten Enden der Verjüngungselemente unterteilen den Spalt 12 im Bereich des Freilaufs 27 in eine Vielzahl von Kammern 35, welche jedoch untereinander verbunden sind, da die maximale radiale Erstreckung r der Verjüngungselemente 34 selbst im Bereich ihrer verdickten Enden nicht der Dicke d des Spaltes 12 entspricht, sondern kleiner ist als jene: r ≤ d, insbesondere: r ≤ 0,5 * d.

In jeder dieser Kammern 35 befindet sich je ein Klemmkörper, vorzugsweise eine Klemmrolle 36, insbesondere mit zu der Drehachse des Lagers 1 paralleler Rotationsachse. Der Durchmesser D dieser Rollen 36 ist gleich der Dicke d₁ des Spaltes 12 auf Höhe der Klemmrollen 36, oder vorzugsweise kleiner als jene; er darf jedoch nicht kleiner sein als die um die maximale radiale Erstreckung r der Verjüngungselemente 34 verminderte Dicke d₁ des Spaltes 12: (d₁ - r) ≤ D ≤ d₁, vorzugsweise (d₁ - r) < D < d₁. Dadurch ist sichergestellt, dass die Klemmrollen 36 am breiten Ende einer Kammer 35 - also im Bereich des flachen Endes eines Verjüngungselements 34 - zwischen den beiden Ringen 3, 4 abrollen und schließlich durchrutschen können, während sie am schmalen Ende der betreffenden Kammer 35 - wo sich also das dicke Ende des betreffenden Verjüngungselements 34 befindet-festklemmen.

Je nach der Relativdrehrichtung der beiden Ringe 3, 4 gegeneinander bewegen sich die Klemmrollen 36 - infolge von (Roll-) Reibung zum breiten oder zum schmalen Ende ihrer Kammern 35 und definieren durch ihren dortigen Zustand - Durchrutschen oder Festklemmen - den Schaltzustand des Freilaufs, der eine Relativverdrehung zwischen den beiden Ringen 3, 4 in einer Richtung zulässt (Freilauf), in der entgegengesetzten Drehrichtung dagegen blockiert (Sperre, Momentenübertragung). Dabei ist die Freilaufdrehrichtung dadurch gekennzeichnet, dass der die Verjüngungselemente 34 aufweisende Ring 3, 4 gegenüber dem anderen Ring 4, 3 in derjenigen Richtung gedreht wird, dass sich die breiten Enden der Kammern 35 jeweils hinter den schmaleren Kammerenden befinden.

In eben dieser Freilaufdrehrichtung rotiert der generatorseitig gekoppelte (äußere) Ring 4 schneller als der mit der Nabe des Windrades gekoppelte (mittlere) Ring 3. D.h., der Rotor des Generators kann - bspw. aufgrund seiner trägen Masse - schneller rotieren als das - bspw. durch eine Gegenbö vorübergehend abgebremste - Windrad. Infolge des Freilaufs 27 wird bei derartigen Windverhältnissen der Generator augenblicklich vom Windrad abgekoppelt und kann daher bspw. mit etwa konstanter Drehzahl weiter rotieren, und erst wenn die Windstärke in Antriebsdrehrichtung wieder zunimmt und demzufolge das Windrad wieder schneller dreht, wird es alsbald mit dem Generator gekoppelt und beginnt, diesem wieder Windenergie zuzuführen.

Die Klemmkörper 36 sind in axialer Richtung auf Höhe der Verjüngungskörper 34 geführt, indem die Kammern 35 oben und unten begrenzt sind. Dies wird dadurch erreicht, dass der Spalt 12 sich ober- und unterhalb der die Klemmkörper 36 aufnehmenden Kammern 35 in seiner Dicke deutlich verjüngt auf eine Spaltdicke d₂, welche erheblich kleiner ist als die maximale Kammerbreite d₁: d₂ < d₁, aber auch kleiner als der Durchmesser D eines Klemmkörpers 36: d₂ < D, insbesondere d₂ < D/2; es ergibt sich damit pro Kammer 35 je eine Art radiale Erweiterung oder "Tasche" zur Aufnahme eines Klemmkörpers 36.

Da die dem Spalt 12 zugewandten Flachseiten der Verjüngungskörper 34 keinen konstanten Abstand zur Drehachse des Lagers 1 aufweisen, also nicht tangential, sondern entlang von Sekanten verlaufen, lassen sich diese Oberflächenbereiche nicht durch Drehen herstellen, sondern müssen bspw. gefräst werden. Um dies bequem herstellen zu können, ist der äußere Ring 4 in drei Teilringe 37, 38, 39 unterteilt, wovon der obere Teilring 37 und der untere Teilring 39 je eine Laufbahn für eine Wälzkörperreihe 28, 29 aufweist, während der dazwischen liegende Teilring 38 an seiner Innenseite entsprechend dem sägezahnförmigen Verlauf der Verjüngungskörper 34 gefräst ist.

Damit diese Teilringe 37, 38, 39 exakt und möglichst spielfrei aufeinander gesetzt werden können, ist im Bereich der Grenz- oder Stoßflächen 40 je eine Absetzung vorgesehen, welche beim Zusammenbau eine exakte Zentrierung hervorruft. Diese Absetzung kann im Querschnitt rechtwinklige Kanten aufweisen, also einen (hohl-) zylindermantelförmigen Abschnitt aufweisen; im Bereich der Absetzung können stattdessen aber auch konische Flächen vorgesehen sein, welche beim Aneinanderfügen zunächst noch eine gewisse Spielfreiheit tolerieren, beim Zusammenschieben dann diesen Spielraum aber stetig einengen, im Idealfall bis auf null.

Während die beiden Ringe 3, 4 miteinander einen Freilauf 27 ausbilden, sind die Ringe 2, 3 nur nach Art einer Drehlagerung 41 miteinander gekoppelt. Im allgemeinen sollen die beiden Ringe 3, 4 des Freilaufs 27 als erster Ring 4 und zweiter Ring 3 bezeichnet werden, die beiden Ringe der Drehlagerung 41 dagegen als zweiter Ring 3 und dritter Ring 2. Der zweite Ring 3 ist dabei einerseits über den Freilauf 27 mit dem ersten Ring 4 und andererseits über die Drehlagerung 41 mit dem dritten Ring 2 gekoppelt. Im allgemeinen wird der zweite Ring 3 an die Rotornabe der Windkraftanlage angeschlossen, während der erste Ring 4 mit dem Generator der Windkraftanlage drehschlüssig gekoppelt wird und der dritte Ring 2 zur Abstützung der anderen beiden an dem Chassis des Maschinenhauses der Windkraftanlage verankert wird. In einzelnen Fällen könnte die Drehlagerung allerdings auch zwischen dem ersten Ring 4 und dem dritten Ring 2 angeordnet sein, so dass primär das generatorseitige Anschlusselement 4 am Maschinenhaus lagerungstechnisch abgestützt wird und das mit der Rotorwelle gekoppelte Anschlusselement 3 sich seinerseits an dem generatorseitigen Anschlusselement 4 abstützt.

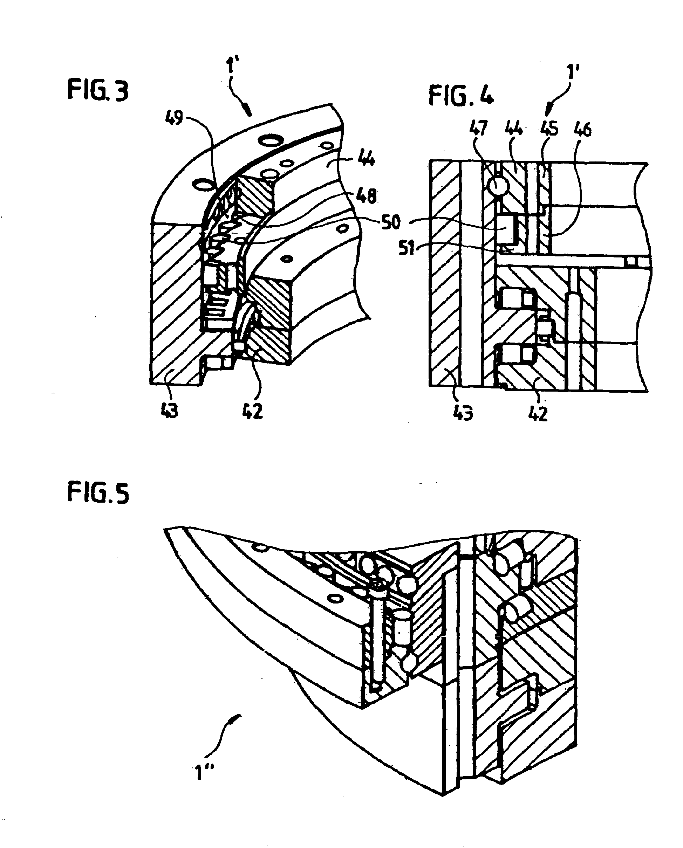

Die Fig. 3 und 4 zeigen eine demgegenüber abgewandelte Ausführungsform eines erfindungsgemäßen Lagers 1'. Während hierbei ein Innenring 42 vorgesehen ist, welcher in seiner Geometrie exakt dem Innenring 2 des Lagers 1 entspricht, ist der daran geführte Ring 43 im Gegensatz zu dem mittleren Ring 2 der Ausführungsform 1 in axialer Richtung verlängert, etwa auf die doppelte Höhe des Innenrings 42. Ein weiterer Ring 44 ist - ähnlich dem Außenring 4 des Lagers 1 - an dem Ring 43 verdrehbar geführt; allerdings befindet sich dieser weitere Ring 44 nicht an der Außenseite des Rings 43, sondern an dessen Innenseite, in axialer Richtung gegenüber dem Ring 42 versetzt, insbesondere nach oben. Als weitere Besonderheit ist bei dieser Ausführungsform 1' der weitere Ring 44 nur in zwei Teilringe 45, 46 unterteilt, wobei ein Teilring 45 die Laufbahn für eine Wälzkörperreihe 47 aufweiset, insbesondere nach Art eines Radiallagers, während an dem anderen Teilring 46 die sägezahnförmigen Verjüngungskörper 48 angeformt sind, insbesondere durch Fräsbearbeitung eines zunächst rotationssymmetrischen Rohlings hergestellt. In diesem Fall sind die Taschen 49 zur Aufnahme je eines Freilauf-Klemmkörpers 50 durch eine Auskehlung des Freilauf-Teilrings 46 gebildet, mit einer die Freilauf-Klemmkörper 50 in axialer Richtung umgreifenden Wange 51.

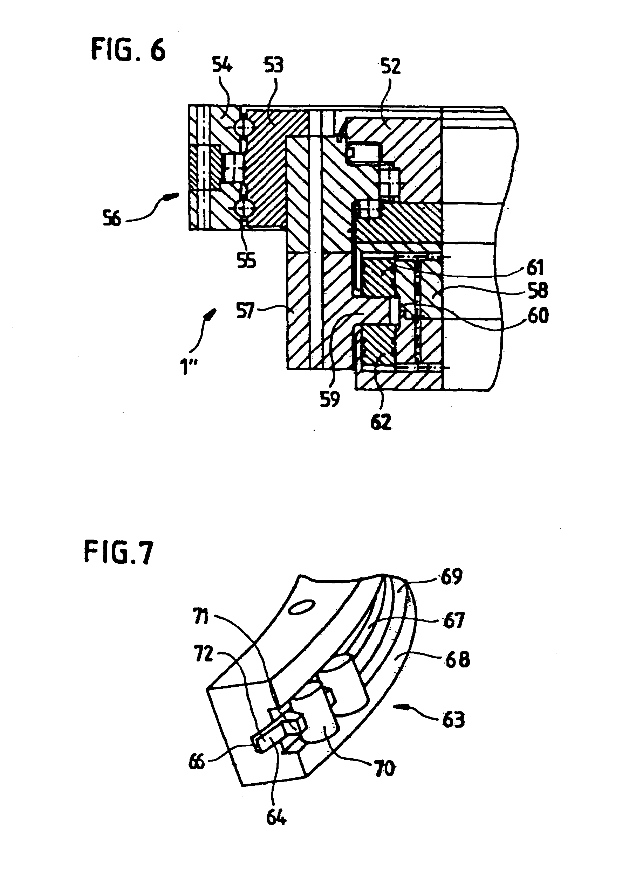

Die Ausführungsform 1" nach den Fig. 5 und 6 sind in ihrem oberen Teil nahezu identisch mit dem Lager 1 aus den Fig. 1 und 2 und umfasst wie dieser einen inneren Ring 52, einen mittleren Ring 53 und einen äußeren Ring 54, wobei der innere und der äußere Ring 52, 54 jeweils an dem mittleren Ring 53 verdrehbar geführt ist und im Bereich des Spaltes 55 zwischen dem mittleren Ring 53 und dem äußeren Ring 54 ein Freilauf 56 vorgesehen ist.

Als Besonderheit ist jedoch bei dieser Ausführungsform 1" der mittlere Ring 53 und der äußere Ring 54 jeweils in die selbe axiale Richtung verlängert, in der Zeichnung jeweils nach unten, bspw. durch je einen angeflanschten Zusatzring 57, 58.

Diese Zusatzringe 57, 58 dienen als Bremse, mit denen der mittlere, vorzugsweise an die Rotornabe gekoppelte Ring 53 an dem äußeren, bevorzugt an dem Chassis des Maschinenhauses festgelegten Ring 54 abgebremst oder gar festgestellt werden kann.

Zu diesem Zweck ist an einem der beiden Zusatzringe 57, 58, in der Zeichnung an dem Zusatzring 57 des mittleren Rings 53, eine rundumlaufende, dem anderen Zusatzring 58 zugewandte Bremsscheibe 59 in Form eines in radialer Richtung vorspringenden Bundes angeformt. Der gegenüber liegende Zusatzring 58 ist querschnittlich nach Art eines "C" ausgebildet mit einer der Bremsscheibe 59 zugewandten Nut 60, in welche die Bremsscheibe 59 eingreift.

Zu beiden Seiten der Bremsscheibe 59, also jenseits ihrer oberen und unteren Flanke, sind jeweils Bremsbacken 61, 62 vorgesehen, und zwar jeweils paarweise in einer zu der Drehachse des Lagers 1" parallelen Flucht einander gegenüberliegend. Vorzugsweise gibt es mehrere derartige Bremsbacken-Paare 61, 62, bspw. über den Umfang verteilt, insbesondere an äquidistanten Positionen. Die Bremsbacken 61, 62 sind bspw. als in einer Zylinderbuchse in axialer Richtung verstellbare Kolben ausgebildet, welche an ihrer Rückseite mit einer Bremsflüssigkeit, bspw. Hydrauliköl od. dgl., beaufschlagbar sind, so dass sie sich an die betreffende Flanke der Bremsscheibe 59 anlegen, um diese und damit den Zusatzring 57 des mittleren Rings 53 abzubremsen und dadurch bspw. die Rotornabe des Windrades zu verlangsamen oder gar festzustellen. Wenn diese vorzugsweise hydraulisch betätigbaren Bremsbacken 61, 62 in dem am Maschinenhauschassis festgelegten Zusatzring 58 geführt sind, rotieren sie nicht mit der Rotornabe mit, so dass die Hydraulikleitungen sehr einfach verlegt werden können.

In der Fig. 7 ist ein Teil eines abgewandelten Freilaufs 63 zu sehen. Dieser Freilauf 63 unterscheidet sich von den vorangehend beschriebenen, dass hier die Verjüngungskörper 64 nicht an dem betreffenden Ring 65 angeformt sind, sondern ähnlich dem Käfig einer Wälzkörperreihe an einem eigenen Band 66 angeordnet sind. Dieses Band 66 kann in einer nutförmigen Vertiefung 67 im Bereich des Spaltes 68, insbesondere im Bereich einer querschnittlich taschenförmigen Vertiefung 69 zur Aufnahme der bspw. als Rollen ausgebildeten Klemmkörper 70 geführt sein. An dem Band 66 sind in gleichen Abständen jeweils Stege 71 angeformt, welche zusammen mit der oberen und unteren Flanke der taschenförmigen Vertiefung 69 jeweils eine Kammer zur Aufnahme eines Klemmkörpers 70 definieren. Diese Stege 71 können bspw. jeweils in der Draufsicht einer trapezförmigen Umriss aufweisen. Zwischen zwei derartigen, benachbarten Stegen 71 ist die Stärke des Bandes nicht konstant, sondern verjüngt sich stetig von einem der beiden Stege 71 zu dem benachbarten hin, und zwar innerhalb aller Kammern in derselben Drehrichtung. Diese flachen Bereiche 72 des Bandes mit einer leicht variierenden Stärke dienen als Anlauffläche für die Klemmkörper 70: An den verjüngten Stellen der flachen Bereiche 72 des Bandes 66 erweitern sich die Kammern; hier können die Klemmkörper 70 zwischen den beiden Ringen 65 des Freilaufs durchrutschen, während sie an den verdickten Stellen der Stellen der flachen Bereiche 72, wo die Kammern schmäler werden, festklemmen. Da sie gleichzeitig das Band 66 fest gegen den Grund der Nut 67 pressen, erfolgt außerdem eine reibschlüssige Arretierung zwischen dem Band 66 und dem betreffenden Ring 65 - der Freilauf 63 befindet sich im Sperrzustand, und die Umschaltung vom Freilauf in den Sperrzustand erfolgt jeweils abhängig von der Relativdrehrichtung zwischen den betreffenden Ringen 65 des Freilaufs 63.

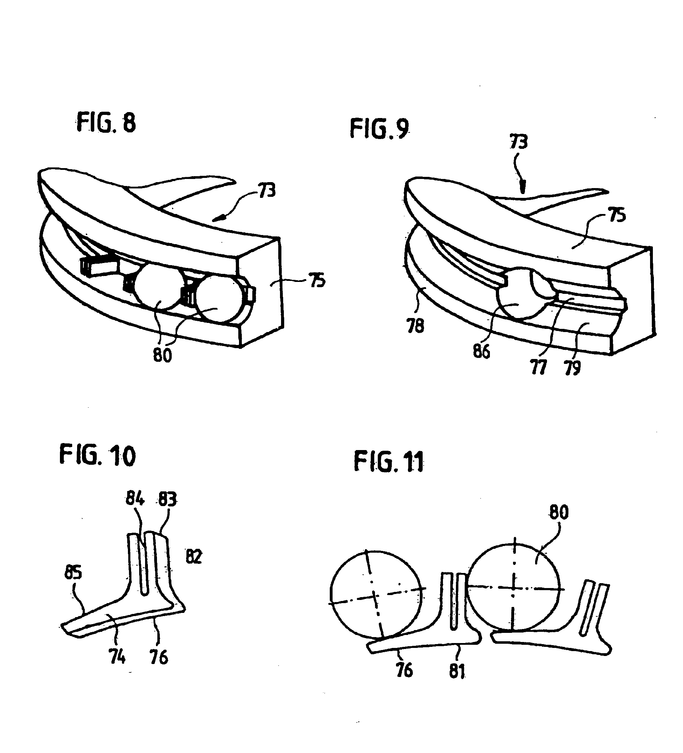

In den Fig. 8 bis 11 sind schließlich die Elemente eines weiteren Freilaufs 73 wiedergegeben. Bei dieser Anordnung sind die Verjüngungselemente 74 weder mit dem betreffenden Ring 75 des Freilaufs 73 verbunden, noch an einem gemeinsamen Band angeordnet, sondern sind jeweils einzelne Teile nach Art der Abstandskörper zwischen den Wälzkörpern eines Wälzlagers.

Jedes Verjüngungselement 74 weist eine Basis 76 auf, die in einer rundumlaufenden, nutförmigen Vertiefung 77 in dem Spalt 78, insbesondere im Bereich einer querschnittlich konkav gewölbten Erweiterung 79 des Spaltes 78 zur Aufnahme der bspw. als Kugeln ausgebildeten Klemmkörper 80 geführt ist. Diese Basis 76 hat eine zu der - bei Führung an der Außenseite des radial innen liegenden Rings 75 des Freilaufs 73 konvexen - Wölbung am Grund der nutförmigen Vertiefung 77 komplementäre - also im vorliegenden Fall also leicht konkav gewölbte - Unterseite 81.

Dieser Unterseite 81 gegenüber liegend weist jedes Verjüngungselement 74 eine in zwei Abschnitte gegliederte Oberseite auf: An einem Ende der Oberseite gibt es jeweils einen steil von der Unterseite 81 weg ragenden Steg 82, der - wie in der Zeichnung dargestellt - von seiner freien Stirnseite 83 her mit einem Schlitz 84 versehen sein kann, so dass sich zwei Federzungen ergeben, mit einer vergleichsweise großen Elastizität. Im übrigen Bereich 85 ist die Oberseite des Verjüngungselements 74 relativ flach, jedoch mit einer stetig variierenden Dicke: Bevorzugt verringert sich die Stärke des flachen Bereichs 85 von dem Steg 82 zu dem gegenüber liegenden Ende des Verjüngungselements 74 hin allmählich. An diesem Ende des flachen Bereichs finden die Klemmkörper 80 ausreichend Platz und ermöglichen daher die freie Verdrehung der Ringe 75 des Freilaufs 73 gegeneinander. Nahe dem Übergang von dem flachen Bereich 85 zu dem Steg 82 ist der verbleibende lichte Querschnitt der betreffenden Kammer jedoch so klein, dass sich die Klemmkörper 80 dort zwischen der Anlauffläche und dem gegenüber liegenden Ring des Freilaufs 73 einklemmen und dadurch den Freilauf 73 in den Sperrzustand schalten, in welchem Antriebsenergie von dem Windrad zu dem Generator übertragen werden kann.

Um die bspw. kugelförmigen Klemmkörper 80 und die Verjüngungskörper 74 auch nach dem Zusammenbau des Freilaufs 73 noch einsetzen oder austauschen zu können, sind im Bereich der querschnittlichen Erweiterung 79 des Spaltes 78 ein oder mehrere Öffnungen 86 vorgesehen, deren Durchmesser das Hindurchschieben eines Klemmkörpers 80 oder Verjüngungskörpers 74 erlaubt. Diese Öffnung(en) 86 wird/werden nach dem vollständigen Befüllen des Freilaufs 73 mit Klemmkörpern 80 und Verjüngungskörpern 74 verschlossen, bspw. mit (je) einem in der Zeichnung nicht dargestellten Stopfen. Dieser kann bspw. ein Gewinde aufweisen, welches in ein Innengwinde der betreffenden Öffnung 86 eingreift.

**Bezugszeichenliste**

| | | | |
|---|---|---|---|
| | | | |
| 1 | Wälzlager | 26 | unterer Teilring |
| 2 | innerer Ring ringförmig Anschlusselement | 27 | Freilauf |
| 3 | mittlerer Ring ringförmig Anschlusselement | 28 | Wälzkörper |
| 4 | äußerer Ring ringförmig Anschlusselement | 29 | Wälzkörper |
| 5 | Anschlussfläche | 30 | Käfig |
| 6 | Anschlussfläche | 31 | Käfig |
| 7 | Anschlussfläche | 32 | Mantelfläche |
| 8 | Befestigungsmittel | 33 | Mantelfläche |
| 9 | Befestigungsmittel | 34 | Verjüngungselement |
| 10 | Befestigungsmittel | 35 | Kammer |
| 11 | Spalt | 36 | Klemmrolle |
| 12 | Spalt | 37 | Teilring |
| 13 | Wälzkörper | 38 | Teilring |
| 14 | Wälzkörper | 39 | Teilring |
| 15 | Wälzkörper | 40 | Grenzfläche |
| 16 | Mantelfläche | 41 | Drehlagerung |
| 17 | Mantelfläche | 42 | innerer Ring ringförmig Anschlusselement |
| 18 | Bund | 43 | mittlerer Ring ringförmig Anschlusselement |
| 19 | Nut | 44 | weiterer Ring ringförmig Anschlusselement |
| 20 | freie Stirnseite | 45 | Teilring |
| 21 | Nutgrund | 46 | Telring |
| 22 | Käfig | 47 | Wälzkörper |
| 23 | Käfig | 48 | Verjüngungskörper |
| 24 | Käfig | 49 | Tasche |
| 25 | oberer Teilring | 50 | Klemmkörper |
| 51 | Wange | 76 | Basis |
| 52 | innerer Ring ringförmig Anschlusselement | 77 | Vertiefung |
| 53 | mittlerer Ring ringförmig Anschlusselement | 78 | Spalt |
| 54 | äußerer Ring ringförmig Anschlusselement | 79 | Erweiterung |
| 55 | Spalt | 80 | Klemmkörper |
| 56 | Freilauf | 81 | Unterseite |
| 57 | Zusatzring | 82 | Steg |
| 58 | Zusatzring | 83 | freie Stirnseite |
| 59 | Bremsscheibe | 84 | Schlitz |
| 60 | Nut | 85 | flacher Bereich |
| 61 | Bremsbacke | 86 | Öffnung |
| 62 | Bremsbacke | | |
| 63 | Freilauf | | |
| 64 | Verjüngungskörper | | |
| 65 | Ring | | |
| 66 | Band | | |
| 67 | Nut | | |
| 68 | Spalt | | |
| 69 | taschenförmige Vertiefung | | |
| 70 | Klemmkörper | | |
| 71 | Steg | | |
| 72 | flacher Bereich | | |
| 73 | Freilauf | | |
| 74 | Verjüngungselement | | |
| 75 | Ring | | |

## Patentansprüche

1. Windkraftanlage mit einem Rotor, der um eine etwa in Windrichtung weisende Achse drehbar gelagert ist, und mit wenigstens zwei ringförmigen, zueinander konzentrischen Anschlusselementen (3,4;43,44;53,54) zum Anschluss an gegeneinander verdrehbare Anlagenteile der Windkraftanlage, von denen ein rotorseitiges Anschlusselement (3,4;43,44;53,54) Mittel (8,9,10) zum Anschluss an den Rotor der Windkraftanlage oder an eine Abtriebswelle eines daran gekoppelten Getriebes aufweist, mit wenigstens einem Element mit einer Freilauf-Charakteristik, welches zwischen zwei ringförmigen Anschlusselementen (3,4;43,44;53,54) angeordnet ist und zusammen mit diesen einen Freilauf (27;56;63;73) bildet, und wobei konzentrisch zu den beiden ringförmigen Anschlusselementen (3,4;43,44;53,54) des Freilaufs (27;56;63;73) ein weiteres, ringförmiges Anschlusselement (2;42;52) vorgesehen ist, **dadurch gekennzeichnet, dass**
a) beide ringförmigen Anschlusselemente (3,4;43,44;53,54) des Freilaufs (27;56;63;73) wenigstens je eine ebene Anschlussfläche (6,7) aufweisen zum Anschluss an ein rotierendes Maschinenelement,
b) wobei beide Anschlussflächen (6,7) des Freilaufs (27;56;63;73) jeweils mehrere, kranzförmig angeordnete Bohrungen (8,9,10) zum Einschrauben oder Durchstecken von Befestigungsschrauben oder -bolzen aufweisen,
c) wobei ferner wenigstens ein Anschlusselement (2,3,4;42,43,44;52,53,54) über wenigstens eine eingearbeitete Laufbahn für eine Reihe von darauf abrollenden Wälzkörpern (13,14,15,28,29;47) verfügt,
d) wobei in dem Bereich des Spaltes zwischen dem weiteren, ringförmigen Anschlusselement (2;42;52) und einem der anderen beiden ringförmigen Anschlusselemente (3,4;43,44;53,54) an Mantelflächen (16,17) der betreffenden ringförmigen Anschlusselemente (2,3,4;42,43,44;52,53,54) nach Art eines Radiallagers wenigstens eine Laufbahn für eine Reihe von darauf abrollenden Wälzkörpern (13) vorgesehen ist, welche zusammen mit den betreffenden Anschlusselementen (2,3,4;42,43,44;52,53,54) eine Drehlagerung (41) bilden.

2. Windkraftanlage nach Anspruch 1, **dadurch gekennzeichnet, dass** ein ringförmiges, generatorseitiges Anschlusselement des Freilaufs (27;56;63;73) Mittel in Form von mehreren, kranzförmig angeordneten Bohrungen (8,9,10) zum Anschluss an einen Generator oder ein diesem vorgeschaltetes Getriebe oder Getriebeelement aufweist.

3. Windkraftanlage nach einem der vorhergehenden Ansprüche, **dadurch gekennzeichnet, dass** der Freilauf (27;56;63;73) Klemmkörper oder - rollen (36;50;70) aufweist, welche sich je nach Drehrichtung zwischen den beiden ringförmigen Anschlusselementen (3,4;43,44;53,54) des Freilaufs (27;56;63;73) festklemmen oder von diesen lösen.

4. Windkraftanlage nach einem der vorhergehenden Ansprüche, **dadurch gekennzeichnet, dass** wenigstens einer der beiden ringförmigen Anschlusselemente (3,4;43,44;53,54) des Freilaufs (27;56;63;73) Anlaufflächen (85) aufweist, welche derart schräg verlaufen, dass der von diesen begrenzte Spalt (12;55;68;78) gegenüber dem anderen ringförmigen Anschlusselement (3,4;43,44;53,54) des Freilaufs (27;56;63;73) sich in jeweils derselben Drehrichtung verjüngt, wobei vorzugsweise die Anlaufflächen (85) als Segmente (34;64;74) ausgebildet sind, welche in Umfangsrichtung des betreffenden ringförmigen Anschlusselements (3,4;43,44;53,54) aneinander gereiht sind und eventuell aneinandergrenzen.

5. Windkraftanlage nach Anspruch 4, **dadurch gekennzeichnet, dass** die Anlaufflächen (85) an Abstandselementen (74) angeordnet sind, welche sich jeweils zwischen benachbarten Klemmkörpern oder -rollen (36;50;70) befinden, und/oder dass die Anlaufflächen (85) an einem oder mehreren käfig- oder bandartigen Segment(en) (66) angeordnet sind, welche jeweils benachbarte Klemmkörper oder -rollen (36;50;70) in gegenseitigem Abstand halten.

6. Windkraftanlage nach Anspruch 5, **dadurch gekennzeichnet, dass** die Klemmkörper oder -rollen (36;50;70) als Wälzkörper ausgebildet sind, die in einer Laufbahn zweier ringförmiger Anschlusselemente (3,4;43,44;53,54) abrollen, wobei die mit je einer Anlauffläche (85) versehenen Abstandselemente (34;64;74) und/oder die Anlaufflächen (85) aufweisende käfig- oder bandartigen Segmente (66) in einer vorzugsweise nutförmigen Vertiefung (67;77) einer Laufbahn (69;79) geführt sind.

7. Windkraftanlage nach einem der vorhergehenden Ansprüche, **dadurch gekennzeichnet, dass** der Freilauf (27;56;63;73) elektrisch schaltbar ausgebildet ist, wobei die Umschaltung zwischen Drehschluss- und Freilaufzustand in Abhängigkeit von der relativen Drehrichtung zwischen den beiden ringförmigen Anschlusselementen (3,4;43,44;53,54) erfolgt.

8. Windkraftanlage nach einem der vorhergehenden Ansprüche, **dadurch gekennzeichnet, dass** in dem Spalt (11,12;55;68;78) zwischen den beiden ringförmigen Anschlusselementen (3,4;43,44;53,54) des Freilaufs wenigstens eine Reihe umlaufender, vorzugsweise kugelförmiger Wälzkörper (13,14,15,28,29;47) angeordnet ist, insbesondere zu beiden Seiten des/der Freilaufelemente (27;56;63;73) jeweils eine Reihe von umlaufenden Wälzkörpern (13,14,15,28,29;47).

9. Windkraftanlage nach einem der vorhergehenden Ansprüche, **dadurch gekennzeichnet, dass** konzentrisch zu den beiden ringförmigen Anschlusselementen (3,4;43,44;53,54) des Freilaufs (27;56;63;73) ein weiteres, ringförmiges, chassisseitiges Anschlusselement (2;42;52) vorgesehen ist, insbesondere zum Anschluss an das Chassis des Maschinenhauses der Windkraftanlage, wobei vorzugsweise im Bereich des Spaltes zwischen dem chassisseitigen Anschlusselement (2;42;52) und einem der beiden anderen Anschlusselemente (3,4;43,44;53,54) an jedem dieser beiden Anschlusselemente (2,3,4;42,43,44;52,53,54) wenigstens eine Laufbahn für eine Reihe von darauf abrollenden Wälzkörpern (13,14,15,28,29;47) vorgesehen ist, welche zusammen mit den betreffenden Anschlusselementen (2,3,4;42,43,44;52,53,54) eine Drehlagerung (41) bilden und bevorzugt als Rollen ausgebildet sind.

10. Windkraftanlage nach Anspruch 9, **dadurch gekennzeichnet, dass** ein ringförmiges Anschlusselement (2,3,4;42,43,44;52,53,54) der Drehlagerung (41) einen rundumlaufenden, in radialer Richtung vorspringenden Bund (18) aufweist, der von einer Nut (19) in dem anderen, ringförmigen Anschlusselement (2,3,4;42,43,44;52,53,54) der Drehlagerung (41) in einem Abstand umgriffen wird.

11. Windkraftanlage nach Anspruch 10, **dadurch gekennzeichnet, dass** der rundumlaufende Bund (18) an einem der beiden ringförmigen Anschlusselemente (2,3,4;42,43,44;52,53,54) der Drehlagerung (41) einen etwa rechteckigen Querschnitt aufweist, wobei vorzugsweise an allen drei freien Ringflächen des rundumlaufenden Bundes (18) je eine Reihe von Wälzkörpern (13,14,15) abrollt.

12. Windkraftanlage nach einem der vorhergehenden Ansprüche, **dadurch gekennzeichnet, dass** zwischen zwei ringförmigen Anschlusselementen (2,3,4;42,43,44;52,53,54), insbesondere zwischen den beiden Anschlusselementen (2,3;42,43;52,53) der Drehlagerung, eine vorzugsweise schaltbare Bremse angeordnet ist.

13. Windkraftanlage nach Anspruch 12, **dadurch gekennzeichnet, dass** an einem ringförmigen Anschlusselement (2,3,4;42,43,44;52,53,54), insbesondere an einem Anschlusselement (2,3;42,43;52,53) der Drehlagerung (41), ein rundumlaufender, vorzugsweise in radialer Richtung vorspringender Bund (59) vorgesehen ist, dessen Flanken sich zur Auflage von Bremsbacken (61,62) eignen, wobei vorzugsweise wenigstens ein Paar von einander in axialer Richtung gegenüberliegenden Bremsbacken (61,62) vorgesehen ist, welche den rundumlaufenden Bund (59) zu beiden Seiten umgreifen und ggf. in axialer Richtung gegeneinander anstellbar oder hydraulisch anstellbar sind, um die Bremse zu betätigen.

## Claims

1. A wind power plant having a rotor mounted rotatably about an axis directed approximately in the wind direction, and having at least two mutually concentric annular connection elements (2, 3, 4; 42, 43, 44; 52, 53, 54) for connection to oppositely rotatable system components of said wind power plant, a rotor-side connection element (3,4;43,44;53,54) thereof comprises means (8, 9, 10) for connection to the rotor of said wind power plant or to a drive shaft of a gearbox coupled thereto (rotor-side connection element), with at least one element having a freewheel characteristic, which element is disposed between two annular connection elements (3, 4; 43, 44; 53, 54) and together with them forms a freewheel (27; 56; 63; 73), and whereby concentrically to both annular connection elements (3,4;43,44; 53,54) of the freewheel (27;56;63;73), a further annular connection element (2;42;52) is provided, **characterized in that**
a) both of said annular connection elements (3, 4; 43, 44; 53, 54) of said freewheel (27; 56; 63; 73) have at least one planar connection surface (6, 7) for connection to a rotating machine element each,
b) whereby both of said connection surfaces (6, 7) of the freewheel (27; 56; 63; 73) have a plurality of coronally arranged bores (8, 9, 10) into which fastening screws or fastening bolts can be screwed or through which they can be passed,
c) whereby further at least one connection element (2, 3, 4; 42, 43, 44; 52, 53, 54) is provided with at least one integrated raceway for a row of rolling bodies (13, 14, 15, 28, 29; 47) rolling thereon,
d) whereby, in the area of the gap between the further annular connection element (2;42;52) and one of both other annular connection elements (3, 4; 43, 44; 53, 54), at the lateral surfaces (16, 17) of the regarding annular connection elements (2,3,4:42,43,44;52,53,54), according to the type of a radial bearing, there is provided at least one raceway for a row of rolling bodies (13) rolling thereon, which form a rotary bearing (41) together with the regarding connection elements (2,3,4;42,43,44;52,53,54).

2. The wind power plant according to claim 1, **characterized in that** an annular generator-side connection element (3, 4; 43, 44; 53, 54) of said freewheel (27; 56; 63; 73) comprises means in the form of several coronally arranged bores (8, 9, 10) for connection to a generator or to a gearbox or gearbox element upstream thereof.

3. The wind power plant according to either of claims 1 and 2, **characterized in that** said freewheel (27; 56; 63; 73) comprises wedging bodies or wedging rollers (36; 50; 70), which become wedged between said two annular connection elements (3, 4; 43, 44; 53, 54) of said freewheel (27; 56; 63; 73) or disengage from them, depending on the direction of rotation.

4. The wind power plant according to one of the preceding claims, **characterized in that** at least one of said two annular connection elements (3, 4; 43, 44; 53, 54) of said freewheel (27; 56; 63; 73) has thrust faces (85) that extend obliquely in such a way that the gap bounded by each of them (12; 55; 68; 78) with respect to the other said annular connection element (3, 4; 43, 44; 53, 54) of said freewheel (27; 56; 63; 73) tapers in the same direction of rotation, whereby preferably said thrust faces (85) are embodied as segments (34; 64; 74) that are arranged in a row in the circumferential direction of the particular said annular connection element (3, 4; 43, 44; 53, 54) and may optionally abut each other.

5. The wind power plant according to claim 4, **characterized in that** said thrust faces (85) are disposed on spacing elements (74) that are each located between neighboring wedging bodies or wedging rollers (36; 50; 70), and/or that said thrust faces (85) are disposed on one or more cage-like or strip-like segment(s) (66) that hold respective adjacent wedging bodies or wedging rollers (33; 50; 70) in spaced-apart relation.

6. The wind power plant according to claim 5, **characterized in that** said wedging bodies or wedging rollers (36; 50; 70) are embodied as rolling bodies that roll in a raceway of said two annular connection elements (3, 4; 43, 44; 53, 54), said spacing elements (34; 64; 74) each having a thrust face (85) and/or said cage-like or strip-like segments (66) comprising said thrust faces (85) being guided in a preferably groove-shaped depression (67; 77) of a said raceway (69; 79).

7. The wind power plant according to one of the preceding claims, **characterized in that** said freewheel (27; 56; 63; 73) is configured as electrically switchable, the switchover between the rotationally locked and freewheeling states taking place in dependence on the relative direction of rotation between said two annular connection elements (3, 4; 43, 44; 53, 54).

8. The wind power plant according to one of the preceding claims, **characterized in that** disposed in said gap (11, 12; 55; 68; 78) between said two annular connection elements (2, 3, 4; 42, 43, 44; 52, 53, 54) of the freewheel is at least one row of circulating, preferably spherical rolling bodies (13, 14, 15, 28, 29; 47), especially a respective row of circulating rolling bodies (13, 14, 15, 28, 29; 47) on each of the two sides of said freewheel element(s) (27; 56; 63; 73).

9. The wind power plant according to one of the preceding claims, **characterized in that** provided concentrically to said two annular connection elements (3, 4; 43, 44; 53, 54) of said freewheel (27; 56; 63; 73) is an additional annular frame-side connection element (4; 42; 52), particularly for connection to the frame of the nacelle of said wind power plant, whereby preferaby there is provided in the region of the gap between said frame-side connection element (2; 42; 52) and one of the two other said connection elements (3, 4; 43, 44; 53, 54), on each of these two said connection elements (2, 3, 4; 42, 43, 44; 52, 53, 54), is at least one respective raceway for a row of rolling bodies (13, 14, 15, 28, 29; 47) rolling thereon, which, together with the respective connection elements (2, 3, 4; 42, 43, 44; 52, 53, 54), form a rotary bearing (41), and are preferably embodied as rollers.

10. The wind power plant according to claim 9, **characterized in that** one of said annular connection elements (2, 3, 4; 42, 43, 44; 52, 53, 54) of said rotary bearing (41) comprises a continuously circumferential collar (18), which protrudes in the radial direction and which is embraced in spaced relation by a groove (19) in the other said annular connection element (2, 3, 4; 42, 43, 44; 52, 53, 54) of said rotary bearing (41).

11. The wind power plant according to claim 10, **characterized in that** said continuously circumferential collar (18) on one of said two annular connection elements (2, 3, 4; 42, 43, 44; 52, 53, 54) of said rotary bearing (41) has an approximately rectangular cross section, whereby preferably a respective row of rolling bodies (13, 14, 15) rolls on each of the three free annular surfaces of said continuously circumferential collar (18).

12. The wind power plant according to one of the preceding claims, **characterized in that** a preferably switchable brake is disposed between two of said annular connection elements (2, 3, 4; 42, 43, 44; 52, 53, 54), particularly between the two said connection elements (2, 3; 42, 43; 52, 53) of said rotary bearing.

13. The wind power plant according to claim 12, **characterized in that** provided on one said annular connection element (2, 3, 4; 42, 43, 44; 52, 53, 54), particularly on a connection element (2, 3; 42, 43; 52, 53) of said rotary bearing (41), is a continuously circumferential collar (59) that preferably protrudes in the radial direction and whose flanks are suitable for the application of brake shoes (61, 62), whereby preferably there is provided at least one pair of brake shoes (61, 62), which face each other in the axial direction and embrace said continuously circumferential collar (59) on both sides and are adjustable or hydraulically adjustable relative to each other in the axial direction in order to actuate the brake.

## Revendications

1. Éolienne comprenant un rotor monté de manière rotative sur un axe sensiblement orienté dans le sens du vent, et au moins deux éléments de raccordement (3, 4 ; 43, 44 ; 53, 54) annulaires concentriques l'un par rapport à l'autre, destinés à être accouplés à des parties d'éolienne pouvant tourner dans des sens opposés, l'un de ces éléments de raccordement (3, 4 ; 43, 44 ; 53, 54) côté rotor comprenant des moyens (8, 9, 10) d'accouplement au rotor de l'éolienne ou à un arbre de sortie d'un mécanisme de transmission qui y est accouplé, au moins un élément présentant une caractéristique de roue libre qui est monté entre deux éléments de raccordement annulaires (3, 4 ; 43, 44 ; 53, 54) et forme une roue libre (27 ; 56 ; 63 ; 73) conjointement à ces der-niers, et un autre élément de raccordement annulaire (2 ; 42 ; 52) concentrique par rapport aux deux éléments de raccordement annulaires (3, 4 ; 43, 44 ; 53, 54) de la roue libre (27 ; 56 ; 63 ; 73) étant prévu, **caractérisée en ce que**
a) les deux éléments de raccordement annulaires (3, 4 ; 43, 44 ; 53, 54) de la roue libre (27 ; 56 ; 63 ; 73) présentent au moins chacun une face de raccordement plane (6, 7) pour le raccordement à un élément de machine rotatif,
b) les deux faces de raccordement (6, 7) de la roue libre (27 ; 56 ; 63 ; 73) présentent respectivement plusieurs trous (8, 9, 10) disposés en forme de couronne pour le vissage ou l'introduction de vis ou de boulons de fixation,
c) en outre, au moins un élément de raccordement (2,3, 4 ; 42, 43, 44 ; 52, 53, 54) dispose au moins d'un chemin de roulement intégré pour une rangée de corps de roulement (13, 14, 15, 28, 29 ; 47) roulant sur ce dernier,
d) au moins un chemin de roulement est prévu pour une rangée de corps de roulement (13) roulant sur ledit chemin dans la zone de la fente entre l'autre élément de raccordement annulaire (2 ; 42 ; 52) et l'un des deux autres éléments de raccordement annulaires (3, 4 ; 43, 44, 53, 54) au niveau des surfaces latérales (16, 17) des éléments de raccordement annulaires (2, 3, 4 ; 42, 43, 44 ; 52, 53, 54) en question sous forme d'un palier radial, lesdits corps de roulement formant conjointement avec les éléments de raccordement (2, 3, 4 ; 42, 43, 44 ; 52, 53, 54) en question un montage rotatif (41)

2. Éolienne selon la revendication 1, **caractérisée en ce qu'**un élément de raccordement annulaire, côté génératrice, de la roue libre (27 ; 56 ; 63 ; 73) présente des moyens sous forme de plusieurs trous (8, 9, 10) disposés en couronne pour le raccordement à une génératrice ou à l'un de ce mécanisme de transmission monté en amont ou élément de transmission.

3. Éolienne selon l'une des revendications précédentes, **caractérisée en ce que** la roue libre (27 ; 56 ; 63 ; 73) présente des corps ou galets de blocage (36 ; 50 ; 70) qui, en fonction du sens de rotation, se bloquent ou se débloquent entre les deux éléments de raccordement annulaires (3, 4 ; 43, 44 ; 53, 54) de la roue libre (27 ; 56 ; 63 ; 73).

4. Éolienne selon l'une des revendications précédentes, **caractérisée en ce qu'**au moins l'un des deux éléments de raccordement annulaires (3, 4 ; 43, 44 ; 53, 54) de la roue libre (27 ; 56 ; 63 ; 73) présente des surfaces de butée (85) dont l'inclinaison est telle que la fente (12 ; 55 ; 68 ; 78) les délimitant par rapport à l'autre élément de raccordement annulaire (3, 4 ; 43, 44 ; 53, 54) de la roue libre (27 ; 56 ; 63 ; 73) s'amincit respectivement dans le même sens de rotation, les surfaces de butée (85) étant réalisées de préférence sous forme de segments (34 ; 64 ; 74) qui sont alignés et éventuellement contigus dans le sens périphérique de l'élément de raccordement annulaire (3, 4 ; 43, 44 ; 53, 54) en question.

5. Éolienne selon la revendication 4, **caractérisée en ce que** les surfaces de butée (85) sont disposées au niveau d'éléments d'écartement (74) qui sont situés respectivement entre des corps ou galets de blocage (36 ; 50 ; 70) adjacents, et/ou les surfaces de butée (85) sont disposées au niveau d'un ou de plusieurs segment(s) (66) en forme de cage ou de bande qui tiennent à une distance réciproque respectivement des corps ou des galets de blocage (36 ; 50 ; 70) adjacents.

6. Éolienne selon la revendication 5, **caractérisée en ce que** les corps ou galets de blocage (36 ; 50 ; 70) sont réalisés sous forme de corps de roulement, qui roulent dans un chemin de roulement de deux éléments de raccordement annulaires (3, 4 ; 43, 44 ; 53, 54), les éléments d'écartement (34 ; 64 ; 74) dotés chacun d'une surface de butée (85) et/ou les surfaces de butée (85) présentant des segments (66) en forme de cage ou de bande étant guidés dans une cavité (67 ; 77) de préférence en forme de rainure d'un chemin de roulement (69 ; 79).

7. Éolienne selon l'une des revendications précédentes, **caractérisée en ce que** la roue libre (27 ; 56 ; 63 ; 73) est réalisée de manière à être commutable électriquement, la commutation entre état de fin de rotation et de roue libre étant en fonction du sens de rotation relatif entre les deux éléments de raccordement annulaires (3, 4 ; 43, 44 ; 53, 54).

8. Éolienne selon l'une des revendications précédentes, **caractérisée en ce qu'**au moins une rangée de corps de roulement (13, 14, 15, 28, 29 ; 47) périphériques, de préférence en forme de bille, est disposée dans la fente (11, 12 ; 55 ; 68 ; 78) entre les deux éléments de raccordement annulaires (3, 4 ; 43, 44 ; 53, 54) de la roue libre, respectivement une rangée de corps de roulement périphériques (13, 14, 15, 28, 29 ; 47) en particulier des deux côtés de l'élément/des éléments de roue libre (27 ; 56 ; 63 ; 73).

9. Éolienne selon l'une des revendications précédentes, **caractérisée en ce que** un autre élément de raccordement annulaire, côté châssis (2 ; 42 ; 52) est prévu de manière concentrique par rapport aux deux éléments de raccordement annulaires (3, 4 ; 43, 44 ; 53, 54) de la roue libre (27 ; 56 ; 63 ; 73), en particulier pour le raccordement au châssis de la nacelle de l'éolienne, où de préférence dans la zone de la fente entre l'élément de raccordement côté châssis (2 ; 42 ; 52) et l'un des deux autres éléments de raccordement (3, 4 ; 43, 44 ; 53, 54) au niveau de chacun de ces deux éléments de raccordement (2, 3, 4 ; 42, 43, 44 ; 52, 53, 54), au moins un chemin de roulement est prévu pour une rangée de corps de roulement (13, 14, 15, 28, 29 ; 47) y roulant, qui forment conjointement avec lesdits éléments de raccordement (2, 3, 4 ; 42, 43, 44 ; 52, 53, 54) un montage rotatif (41) et de préférence sont réalisés sous forme de galets.

10. Éolienne selon la revendication 9, **caractérisée en ce qu'**un élément de raccordement annulaire (2, 3, 4 ; 42, 43, 44 ; 52, 53, 54) du montage rotatif (41) présente un épaulement (18) périphérique, saillant en sens radial, qui est enveloppé en étant espacé par une rainure (19) dans l'autre élément de raccordement annulaire (2, 3, 4 ; 42, 43, 44 ; 52, 53, 54) du montage rotatif (41).

11. Éolienne selon la revendication 10, **caractérisée en ce que** l'épaulement (18) périphérique présente au niveau de l'un des deux éléments de raccordement annulaires (2, 3, 4 ; 42, 43, 44 ; 52, 53, 54) du montage rotatif (41) une section approximativement rectangulaire, où respectivement une rangée de corps de roulement (13, 14, 15) roule de préférence au niveau de toutes les trois surfaces annulaires libres de l'épaulement (18) périphérique.

12. Éolienne selon l'une des revendications précédentes, **caractérisée en ce qu'**un frein de préférence commutable est disposé entre deux éléments de raccordement annulaires (2, 3, 4 ; 42, 43, 44 ; 52, 53, 54), en particulier entre les deux éléments de raccordement (2, 3, 4 ; 42, 43 ; 52, 53) du montage rotatif.

13. Éolienne selon la revendication 12, **caractérisée en ce qu'**un épaulement (59) périphérique, de préférence saillant en sens radial, est prévu au niveau d'un élément de raccordement annulaire (2, 3, 4 ; 42, 43, 44 ; 52, 53, 54), en particulier au niveau d'un élément de raccordement (2, 3 ; 42, 43 ; 52, 53) du montage rotatif (41), les flancs dudit épaulement étant appropriés pour l'appui de mâchoires de frein (61, 62), où de préférence au moins une paire de mâchoires de frein (61, 62) opposées l'une par rapport à l'autre en sens axial est prévue, lesdites mâchoires enveloppant des deux côtés l'épaulement (59) périphérique et, le cas échéant, pouvant être réglées l'une contre l'autre en sens radial ou pouvant être réglées hydrauliquement pour actionner le frein.
